# EUROPEAN PATENT APPLICATION

(11) **EP 4 411 163 A1**
(43) Date of publication of application: **07.08.2024**
(21) Application number: 23217492.0
(22) Date of filing: 18.12.2023
(51) Int. Cl.: F16F 7/00, F16F 9/04

(54) **VIBRATION-DAMPING MEMBER, SENSOR AND CARRIER SYSTEM**

(30) Priority: 19.01.2023 CN 202320180086 U
(71) Applicant: Innovusion (Ningbo) Co., Ltd., Ningbo, Zhejiang 315048 (CN)
(72) Inventor: CHEN, Gang, ZHEJIANG, 315048 (CN); LU, Lirui, ZHEJIANG, 315048 (CN)
(74) Representative: Sackin, Robert

(57) **Abstract**

A vibration-damping member (100), a sensor (300), and a carrier system are provided. The vibration-damping member (100) is configured for arrangement between a first member (200) and a second member (400), and includes a plurality of elastic vibration-damping units (110) arranged in a plane and spaced apart from each other, wherein each of the plurality of elastic vibration-damping units (110) has a hollow structure and is capable of elastically deforming between the first member (200) and the second member (400).

## Description

### TECHNICAL FIELD

The present disclosure relates to the technical field of sensors, and in particular to a vibration-damping member, a sensor and a carrier system.

### BACKGROUND

An autonomous vehicle relies on collaboration of artificial intelligence, visual computing, radars, monitoring devices, global positioning systems, etc., and can travel without a need for a person to actually manipulate the vehicle in the vehicle. Therefore, the autonomous vehicle is one of the main development directions of intelligent transportation in the future.

NVH (Noise, Vibration, Harshness) is a comprehensive issue as a measure of the manufacturing quality of an automobile, and brings the most direct and superficial experience to a user of the automobile. For an autonomous vehicle, since a plurality of sensors need to be configured, if the vibration transfer between the sensors and a vehicle body cannot be attenuated effectively, the driving experience of a user of a vehicle and the service life of the sensors can be significantly influenced.

### SUMMARY

Embodiments of the present disclosure provide a vibration-damping member, a sensor and a carrier system, so as to attenuate vibration transfer between two members, to enhance the operation reliability of, for example, a sensor mounted on a carrier, and to enhance the driving experience of a user of a carrier system such as a vehicle.

According to an aspect of the present disclosure, a vibration-damping member for arrangement between a first member and a second member is provided. The vibration-damping member includes a plurality of elastic vibration-damping units arranged in a plane and spaced apart from each other, wherein each of the plurality of elastic vibration-damping units has a hollow structure and is capable of elastically deforming between the first member and the second member.

According to an aspect of the present disclosure, a sensor for being mounted to a carrier is provided. The sensor has a mounting surface facing the carrier, wherein the vibration-damping member according to the foregoing aspect is provided on the mounting surface.

According to an aspect of the present disclosure, a carrier system is provided, including a sensor according to the foregoing aspect.

According to one or more embodiments of the present disclosure, elastic vibration-damping units of the vibration-damping member is capable of elastically deforming upon receiving vibrations transferred from the first member or the second member, so that the energy of vibration can be absorbed and the vibration transfer can be attenuated, and thus the operational reliability of, for example, a sensor mounted on a carrier can be can enhanced, and the driving experience and feeling of a user of a carrier system such as a vehicle can be enhanced.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

More details, features, and advantages of the present disclosure are disclosed in the following description of exemplary embodiments in conjunction with the drawings, in which:
FIG. 1 is a schematic cross-sectional view of a vibration-damping member arranged between a first member and a second member according to some exemplary embodiments of the present disclosure;
FIG. 2 is a front view of a vibration-damping member mounted with a second member according to some exemplary embodiments of the present disclosure; and
FIG. 3 is a schematic cross-sectional view of a vibration-damping member arranged between a first member and a second member according to some exemplary embodiments of the present disclosure.

### List of reference numerals:

100-Vibration-damping member
200-First member
400-Second member
300-Sensor
310-Mounting surface
110-Elastic vibration-damping unit
11-First sidewall portion
12-Second sidewall portion
13-Third sidewall portion
14-Fourth sidewall portion
120-Adhesive layer

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the drawings and the description are considered as exemplary in nature, and not as restrictive.

For an autonomous vehicle, since a plurality of sensors need to be configured, if the vibration transfer between the sensors and a vehicle body cannot be attenuated effectively, the service life of the sensors and the driving experience of a user of a vehicle can be significantly influenced.

On this basis, embodiments of the present disclosure provide a vibration-damping member, a sensor and a carrier system, so as to attenuate vibration transfer between two members, to enhance the operation reliability of, for example, a sensor mounted on a carrier, and to enhance the driving experience and feeling of a user of a carrier system such as a vehicle.

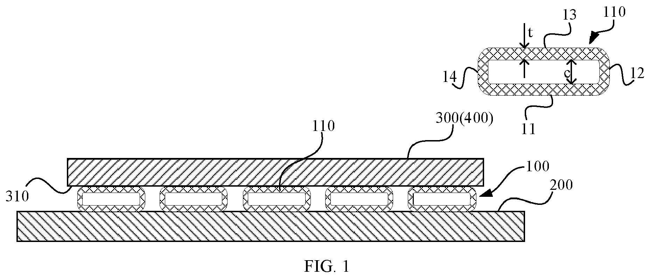

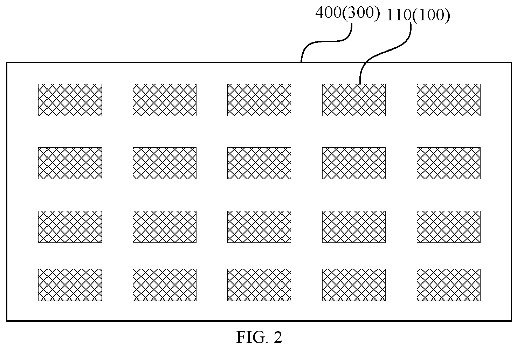

As shown in FIGS. 1 and 2, a vibration-damping member 100 provided in some embodiments of the present disclosure is configured for arrangement between a first member 200 and a second member 400. The vibration-damping member 100 includes a plurality of elastic vibration-damping units 110 arranged in a plane and spaced apart from each other, wherein each elastic vibration-damping unit 110 has a hollow structure and is capable of elastically deforming between the first member 200 and the second member 400.

In the embodiments of the present disclosure, the specific types of the first member 200 and the second member 400 are not specifically defined.

For example, in some embodiments, the first member 200 is a vehicle body of an autonomous vehicle and the second member 400 is a sensor 300. When the sensor 300 is assembled with the vehicle body, the vibration-damping member 100 provided in the embodiments of the present disclosure can be arranged between the sensor and the vehicle body.

For example, in some other embodiments, the first member 200 is a main body of an aircraft and the second member 400 is a camera. When the camera is assembled with the main body of the aircraft, the vibration-damping member 100 provided in the embodiments of the present disclosure can be arranged between the sensor and the main body of the aircraft.

The elastic vibration-damping units 110 of the vibration-damping member 100 according to the embodiments of the present disclosure are capable of elastically deforming upon receiving vibrations transferred from the first member 200 or the second member 400, so that the energy of vibration can be absorbed and the transfer of vibration can be effectively attenuated. Therefore, the vibration-damping member 100 according to the embodiments of the present disclosure can attenuate the vibration transfer between the two members. For example, when the first member serves as a carrier and the second member is mounted on the first member, on one hand, the influence of the vibrations of the first member serving as a carrier (for example, various carrier systems such as a vehicle, an aircraft) on the operating performance and service life of the second member (for example, a sensor) mounted thereon be reduced, and on the other hand, in the case of the second member generating vibrations itself, the energy of vibration transferred from the second member to the first member can also be attenuated, thereby improving the NVH performance of the first member as a carrier, and enhancing the driving experience and feeling of a user of a carrier system such as a vehicle, or an aircraft.

In the embodiments of the present disclosure, as shown in FIG. 2, the plurality of elastic vibration-damping units 110 may be arranged in an array in a plane, for example, in a matrix. The plurality of elastic vibration-damping units 110 may be arranged in an M x N array, wherein M ≥ 2 and N ≥ 2.

In some other embodiments, the plurality of elastic vibration-damping units 110 may also be arranged in a row or a column.

In the embodiments of the present disclosure, the specific structural form of the elastic vibration-damping unit 110 is not defined. As shown in FIG. 1, each of the elastic vibration-damping units 110 is in the form of a cylinder, with two ends in an axial direction being open ends, and a cross-sectional structure thereof is illustrated in the figure, wherein the axial direction can be understood as a direction of a central axis of the cylinder, and the cross section is orthogonal to the axial direction.

In some other embodiments of the present disclosure, each of the elastic vibration-damping units may also be in the form of a closed cavity, and has an interior filled with a gas. The specific type of the gas for filling in the elastic vibration-damping unit is not limited. For example, the gas may be air or an inert gas. The elastic vibration-damping units are capable of elastically deforming upon receiving vibrations transferred from the first member 200 or the second member 400, so that the energy of vibration can be absorbed.

In the present disclosure, the axial length dimension of the elastic vibration-damping unit 110 in the form of a cylinder is not specifically defined, and may be designed according to the specific shape and dimension of the assembly bonding surface between the two members. In some embodiments, the plurality of elastic vibration-damping units 110 are arranged in a row or a column, and the axial length dimension of each of the elastic vibration-damping units 110 may be designed to be relatively large, and may be, for example, significantly larger than the maximum cross-sectional dimension of the elastic vibration-damping unit 110. In some other embodiments, the plurality of elastic vibration-damping units 110 are arranged in an array, and the axial length dimension of each of the elastic vibration-damping units 110 may be designed to be relatively small, and may be, for example, less than or equal to the maximum cross-sectional dimension of the elastic vibration-damping unit 110 and as similar to the shape of a ring.

In some embodiments of the present disclosure, each of the elastic vibration-damping units 110 is a thin-walled elastic vibration-damping unit. As shown in FIG. 1, each of the elastic vibration-damping units 110 has a material thickness "t" of less than 0.15 mm. The material thickness herein can be understood as a wall thickness of the elastic vibration-damping unit 110. The elastic vibration-damping unit 110 with an appropriate material thickness can have good elasticity, so that the energy of vibration can be absorbed more effectively and the vibration transfer can be attenuated.

In the present disclosure, the specific shape of the elastic vibration-damping unit 110 in the form of a cylinder is not specifically limited. For example, the elastic vibration-damping unit 110 may be designed to be in the form of a cylinder, a flat cylinder, a polygonal cylinder, or the like.

As shown in FIG. 1, in some embodiments of the present disclosure, each of the elastic vibration-damping units 110 is in the form of a flat cylinder, and includes a first sidewall portion 11, a second sidewall portion 12, a third sidewall portion 13 and a fourth sidewall portion 14 that are connected in sequence, wherein a spacing between the first sidewall portion 11 and the third sidewall portion 13 is less than a spacing between the second sidewall portion 12 and the fourth sidewall portion 14, a lateral surface of the first sidewall portion 11 faces the first member 200, and a lateral surface of the third sidewall portion 13 faces the second member 400.

In this embodiment, the elastic vibration-damping unit 110 is in the form of a flat cylinder, and the elastic deformation mainly occurs in the second sidewall portion 12 and the fourth sidewall portion 14, so that the direction of deformation is substantially perpendicular to an assembly bonding surface between the first member 200 and the second member 400, and the first sidewall portion 11 and the second sidewall portion 12 have a relatively large contact area with the structures on two sides. In this way, not only can the stability of the elastic deformation of the elastic vibration-damping units 110 be improved, but forces on the first member 200 and the second member 400 can also be made more balanced.

In some embodiments of the present disclosure, the spacing "c" between the first sidewall portion 11 and the third sidewall portion 13 is not less than 1 mm and not more than 5 mm. A reasonable design of the spacing between the first sidewall portion 11 and the third sidewall portion 13 allows the elastic vibration-damping units 110 to have good elasticity, so that energy of vibration can be absorbed more effectively and the vibration transfer can be attenuated.

In some embodiments of the present disclosure, at least one of the plurality of elastic vibration-damping units 110 is a thermally conductive elastic vibration-damping unit. In this way, heat can be transferred between the first member 200 and the second member 400 to improve the heat dissipation performance of, for example, a sensor, thereby facilitating improving the operation reliability of, for example, the sensor, and prolonging the service life thereof.

In some embodiments, the thermally conductive elastic vibration-damping unit may be an elastic vibration-damping unit of graphene. That is, the material of the thermally conductive elastic vibration-damping unit includes graphene. Graphene is a two-dimensional crystal having a good strength, flexibility, electrical conductivity, and heat conductivity.

In some embodiments, the thermally conductive elastic vibration-damping unit may be an elastic vibration-damping unit of copper or aluminum. That is, the material of the thermally conductive elastic vibration-damping unit includes copper or aluminum. Copper and aluminum are both metallic materials with good heat conductivity.

In some embodiments, the thermally conductive elastic vibration-damping unit may also be an elastic vibration-damping unit of foam metal. Foam metal is a porous metallic material forming a three-dimensional spatial network structure in a metallic matrix, also known as a porous foam metal, and has characteristics of a large pore size, a high porosity and a low density. Since the foam metal has both the properties of metals and some special physical properties of non-metals, the foam metal can be used as a vibration-absorbing and heat-conducting material and has good impact resistance. In the embodiments of the present disclosure, the metal matrix of the elastic vibration-damping unit of foam metal may be a metallic material with relatively good heat conductivity, for example, aluminum or copper.

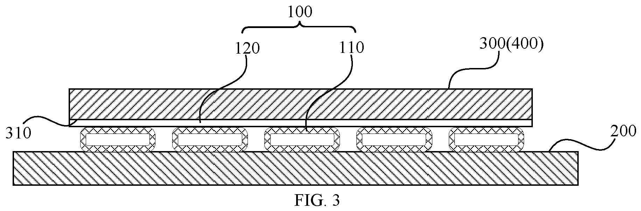

As shown in FIG 3, in some embodiments of the present disclosure, the vibration-damping member 100 further includes an adhesive layer 120, one side surface of the adhesive layer 120 is adhered to the plurality of elastic vibration-damping units 110, and the other side surface of the adhesive layer 120 is configured for being adhered to the first member 200 or the second member 400. The adhesive layer 120 may be a double-sided adhesive to facilitate assembling the entire vibration-damping member 100 with the first member 200 or the second member 400. The vibration-damping member 100 is assembled with the second member 400 by means of the adhesive layer 120 as shown in the figure.

In some embodiments of the present disclosure, the adhesive layer 120 is a thermally conductive adhesive layer. The thermally conductive adhesive layer may be, for example, an organosilicone thermally conductive adhesive, an epoxy resin thermally conductive adhesive, or a thermally conductive silicone grease. In this way, the efficiency of heat transfer between the first member 200 and the second member 400 can be improved.

As shown in FIGS. 1 and 2, the embodiments of the present disclosure further provide a sensor 300. The sensor 300 has a mounting surface 310 facing a carrier (for example, the first member 200), and the vibration-damping member 100 of the foregoing embodiments is provided on the mounting surface 310.

When the sensor 300 is manufactured, the vibration-damping member 100 may be fixed to the mounting surface 310 of the sensor 300 for mounting to a carrier (for example, the first member 200, such as a vehicle body), so that after the sensor 300 is mounted to the carrier, the vibration-damping member 100 can attenuate the vibration transfer between the sensor 300 and the carrier, thereby contributing to improving the operation reliability of the sensor and improving the driving experience and feeling of the user of the carrier system such as a vehicle.

As shown in FIG 3, in some embodiments, the vibration-damping member 100 further includes an adhesive layer 120, one side surface of the adhesive layer 120 is adhered to the plurality of elastic vibration-damping units 110, and the other side surface of the adhesive layer 120 is adhered to the mounting surface 310. The vibration-damping member 100 can be adhered to the mounting surface 310 of the sensor 300 by means of the adhesive layer 120, which is not only easy and quick to assemble and disassemble, but also more favorable to fully absorb the energy of vibration transferred between the sensor 300 and the carrier.

In some embodiments, the sensor 300 may be elastically connected to the carrier according to assembly requirements. For example, the elastic connection between the two can be implemented by means of a combination of a fastener and a rubber ring or a wave pad.

In some embodiments of the present disclosure, the vibration-damping member 100 may also be a separate member provided with a release liner on a surface of the adhesive layer. When the sensor 300 is assembled with the carrier, the release liner is removed, and the vibration-damping member 100 is adhered to the mounting surface 310 of the sensor 300.

The embodiments of the present disclosure further provide a carrier system, including the sensor 300 according to the foregoing embodiments.

The carrier system includes, but is not limited to, a vehicle, an aircraft, an unmanned aerial vehicle, a ship. The specific type of a vehicle is not limited, and the vehicle may be, for example, an autonomous vehicle. The specific type of the sensor 300 is not limited, and the sensor may be, for example, a camera, a lidar, a millimeter wave radar or an ultrasonic radar. Based on the above beneficial effects of the vibration-damping member 100 of the sensor 300, the carrier system may also obtain corresponding beneficial effects. For example, since the vibration transfer between the sensor 300 and the vehicle body of the autonomous vehicle is attenuated, the operation reliability of the sensor is improved, and the driving experience and feeling of a user of the vehicle and the reliability of the vehicle are greatly improved.

Some exemplary solutions of the present disclosure are described below.

Solution 1. A vibration-damping member for arrangement between a first member and a second member, including a plurality of elastic vibration-damping units arranged in a plane and spaced apart from each other, wherein
each of the plurality of elastic vibration-damping units has a hollow structure and is capable of elastically deforming between the first member and the second member.

Solution 2. The vibration-damping member according to Solution 1, wherein
each of the plurality of elastic vibration-damping units is in the form of a cylinder.

Solution 3. The vibration-damping member according to Solution 1, wherein
each of the plurality of elastic vibration-damping units is in the form of a closed cavity, and has an interior filled with a gas.

Solution 4. The vibration-damping member according to any one of Solutions 1-3, wherein,
at least one of the plurality of elastic vibration-damping units is a thermally conductive elastic vibration-damping unit.

Solution 5. The vibration-damping member according to Solution 4,
including elastic vibration-damping units.

Solution 6. The vibration-damping member according to Solution 4, wherein
the thermally conductive elastic vibration-damping unit includes an elastic vibration-damping unit of copper or aluminum.

Solution 7. The vibration-damping member according to Solution 4, wherein
the thermally conductive elastic vibration-damping unit includes an elastic vibration-damping unit of foam metal.

Solution 8. The vibration-damping member according to Solution 4, wherein
the material of the thermally conductive elastic vibration-damping unit includes at least one of graphene, copper, aluminum and foam metal.

Solution 9. The vibration-damping member according to any one of Solutions 1-8, wherein
each of the plurality of elastic vibration-damping units has a material thickness of less than 0.15 mm.

Solution 10. The vibration-damping member according to any one of Solutions 1, 2 and 4 to 9, wherein
each of the plurality of elastic vibration-damping units is in the form of a flat cylinder, and includes a first sidewall portion, a second sidewall portion, a third sidewall portion and a fourth sidewall portion that are connected in sequence, wherein a spacing between the first sidewall portion and the third sidewall portion is less than a spacing between the second sidewall portion and the fourth sidewall portion, a lateral surface of the first sidewall portion faces the first member, and a lateral surface of the third sidewall portion faces the second member.

Solution 11. The vibration-damping member according to Solution 10, wherein
the spacing between the first sidewall portion and the third sidewall portion is not less than 1 mm and not more than 5 mm.

Solution 12. The vibration-damping member according to any one of Solutions 1 to 11, wherein
the plurality of elastic vibration-damping units are arranged in an array.

Solution 13. The vibration-damping member according to any one of Solutions 1 to 12, further including:
an adhesive layer, wherein one side surface of the adhesive layer is adhered to the plurality of elastic vibration-damping units, and the other side surface of the adhesive layer is adhered to the first member or the second member.

Solution 14. The vibration-damping member according to Solution 13, wherein
the adhesive layer is a thermally conductive adhesive layer.

Solution 15. A sensor for being mounted to a carrier, the sensor having a mounting surface facing the carrier, wherein the mounting surface is provided with a vibration-damping member according to any one of Solutions 1 to 14.

Solution 16. The sensor according to Solution 15, wherein
the vibration-damping member further includes an adhesive layer, one side surface of the adhesive layer is adhered to the plurality of elastic vibration-damping units, and the other side surface of the adhesive layer is configured for being adhered to the mounting surface.

Solution 17. The sensor according to Solution 15 or 16, wherein the sensor is configured for being elastically connected to the carrier.

Solution 18. A carrier system, comprising a sensor according to any one of Solutions 15 to 17.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the drawings, and these terms are merely for ease of description, rather than indicating or implying that a device or element referred to must have particular orientations and be constructed and operated in the particular orientations, and therefore should not be construed as limiting the scope of protection of the present disclosure.

In addition, the terms "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "plurality of' means two or more, unless specifically and specifically defined otherwise.

In the present disclosure, unless expressly stated or defined otherwise, the terms such as "mounting", "connection", "connected" and "fixing" should be interpreted broadly, for example, either fixed or detachable connection, or integration, which may be mechanical connection, or electrical connection, or communication, and which may be direct connection or indirect connection by means of an intermediate medium, and may be communication between the interiors of two elements or the interaction relationship between the two elements. For those of ordinary skill in the art, the specific meanings of the above terms in the present disclosure can be understood according to specific circumstances.

In the present disclosure, unless expressly stated or limited otherwise, the expression of the first feature being "above" or "below" the second feature may comprise the case that the first feature is in direct contact with the second feature, and may also comprise the case that the first and second features are not in direct contact but are contacted via another feature therebetween. Furthermore, the first feature being "over", "above" or "on" the second feature includes the case that the first feature is directly or obliquely above the second feature, or merely indicates that the first feature is at a higher level than the second feature. The first feature being "below", "under" or "beneath" the second feature includes the case that the first feature is directly or obliquely below the second feature, or merely indicates that the first feature is at a smaller level than the second feature.

This description provides many different embodiments or examples that can be used to implement the present disclosure. It should be understood that these various embodiments or examples are purely illustrative and are not intended to limit the scope of protection of the present disclosure in any way. On the basis of the disclosure of the description of the present disclosure, those skilled in the art will be able to conceive of various changes or substitutions. Any changes or substitutions shall fall within the scope of protection of the present disclosure. Therefore, the scope of protection of the present disclosure shall be subject to the scope of protection of the claims.

## Claims

1. A vibration-damping member for arrangement between a first member and a second member, comprising a plurality of elastic vibration-damping units arranged in a plane and spaced apart from each other, wherein
each of the plurality of elastic vibration-damping units has a hollow structure and is capable of elastically deforming between the first member and the second member.

2. The vibration-damping member according to Claim 1, wherein
each of the plurality of elastic vibration-damping units is in the form of a cylinder.

3. The vibration-damping member according to Claim 1 or Claim 2, wherein
each of the plurality of elastic vibration-damping units is in the form of a closed cavity, and has an interior filled with a gas.

4. The vibration-damping member according to any one of Claims 1 to 3, wherein
at least one of the plurality of elastic vibration-damping units is a thermally conductive elastic vibration-damping unit.

5. The vibration-damping member according to Claim 4, wherein
the thermally conductive elastic vibration-damping unit comprises an elastic vibration-damping unit of graphene; or
the thermally conductive elastic vibration-damping unit comprises an elastic vibration-damping unit of copper or aluminum; or
the thermally conductive elastic vibration-damping unit comprises an elastic vibration-damping unit of foam metal.

6. The vibration-damping member according to any one of Claims 1 to 5, wherein
each of the plurality of elastic vibration-damping units has a material thickness of less than 0.15 mm.

7. The vibration-damping member according to any one of Claims 1, 2, 4 and 5, wherein
each of the plurality of elastic vibration-damping units is in the form of a flat cylinder, and comprises a first sidewall portion, a second sidewall portion, a third sidewall portion and a fourth sidewall portion that are connected in sequence, wherein a spacing between the first sidewall portion and the third sidewall portion is less than a spacing between the second sidewall portion and the fourth sidewall portion, a lateral surface of the first sidewall portion faces the first member, and a lateral surface of the third sidewall portion faces the second member.

8. The vibration-damping member according to Claim 7, wherein
the spacing between the first sidewall portion and the third sidewall portion is not less than 1 mm and not more than 5 mm.

9. The vibration-damping member according to any one of Claims 1 to 8, wherein
the plurality of elastic vibration-damping units are arranged in an array.

10. The vibration-damping member according to any one of Claims 1 to 9, wherein further comprising:
an adhesive layer, wherein one side surface of the adhesive layer is adhered to the plurality of elastic vibration-damping units, and the other side surface of the adhesive layer is configured for being adhered to the first member or the second member.

11. The vibration-damping member according to Claim 10, wherein
the adhesive layer is a thermally conductive adhesive layer.

12. A sensor for being mounted to a carrier, comprising a mounting surface facing the carrier, wherein the mounting surface is provided with a vibration-damping member according to any one of Claims 1 to 11.

13. The sensor according to Claim 12, wherein
the vibration-damping member further comprises an adhesive layer, one side surface of the adhesive layer is adhered to the plurality of elastic vibration-damping units, and the other side surface of the adhesive layer is adhered to the mounting surface.

14. The sensor according to Claim 12 or 13, wherein the sensor is configured for being elastically connected to the carrier.

15. A carrier system, comprising a sensor according to any one of Claims 12 to 14.
